Europäisches Patentamt

(19) **European Patent Office**

Office européen des brevets

(11) Veröffentlichungsnummer: **0 053 731**
**B1**

(12) EUROPÄISCHE PATENTSCHRIFT

(45) Veröffentlichungstag der Patentschrift:
**24.10.84**

(51) Int. Cl.³: **E 02 B 15/04**

(21) Anmeldenummer: **81109486.1**

(22) Anmeldetag: **03.11.81**

(54) **Vorrichtung zum Fördern und Aufstauen von auf spezifisch schwereren Flüssigkeiten schwimmenden leichteren Flüssigkeiten, insbesondere von auf Wasser schwimmendem Öl.**

(30) Priorität: **09.12.80 DE 8032677 U**
**13.10.81 DE 8129821 U**

(43) Veröffentlichungstag der Anmeldung:
**16.06.82 Patentblatt 82/24**

(45) Bekanntmachung des Hinweises auf die Patenterteilung:
**24.10.84 Patentblatt 84/43**

(84) Benannte Vertragsstaaten:
**DE FR GB NL SE**

(56) Entgegenhaltungen:
**EP - A - 0 005 411**
**WO - A - 80/00721**
**WO - A - 81/01720**
**CH - A - 454 047**
**FR - A - 2 447 352**

(73) Patentinhaber: **Jastram-Werke GmbH & Co. KG,**
**Billwerder Billdeich 603, D-2050 Hamburg 80 (DE)**

(72) Erfinder: **Münte, Harm-Hinrich, Dipl.-Ing.,**
**Gartenstrasse 9, D-2057 Reinbek-Neuschönningstedt (DE)**

(74) Vertreter: **Patentanwälte Dipl.-Ing. J. Richter Dipl.-Ing. F. Werdermann, Neuer Wall 10, D-2000 Hamburg 36 (DE)**

ACTORUM AG

## Beschreibung

Die Erfindung bezieht sich auf eine Vorrichtung zum Fördern und Aufstauen von auf spezifisch schwereren Flüssigkeiten schwimmenden leichteren Flüssigkeiten, insbesondere von auf Wasser schwimmendem Öl, unter Verwendung eines quer zur Anströmrichtung angeordneten Staukörpers, mit dem im Bereich der Trennschicht der beiden Flüssigkeiten eine in die gewünschte Förderrichtung weisende, örtliche Übergeschwindigkeit erzeugbar ist.

Bei Tankerunfällen, hervorgerufen durch Kollision oder Grundberührung, und bei Unfällen im Offshore-Bereich treten oftmals grössere Mengen Öl aus, die sich rasch auf der Wasseroberfläche ausbreiten. Dabei entstehen je nach Ölart und Witterungsbedingungen grossflächige Ölfilme oder relativ dicke Ölteppiche, die dann durch Wind und Strömungen auseinandergetrieben werden.

Um sowohl das Meer als auch die Küstenbereiche vor einer solchen Verschmutzung zu schützen, muss das Öl möglichst rasch und rechtzeitig entfernt werden. Dazu ist es notwendig, die Ölschichten in solche Bereiche abzuleiten und zu befördern, aus denen sie mit üblichen Aufnahmegeräten leichter abgeschöpft werden können. Ein wirkungsvolles Abschöpfen ist aber nur dann möglich, wenn die Ölschicht stark aufgedickt oder aufgestaut ist.

Dieses Fördern und Aufstauen des Öls stellt in der Praxis oftmals ein grosses Problem dar, da sich vor allen wandartigen Bauteilen, die durch mit Öl bedecktes Wasser bewegt werden, eine Wirbelwalze, der sogenannte «Ölfilm-Rückwirbel» ausbildet. Dieser verhindert nicht nur das Aufstauen des Öls, sondern bildet auch Wirbelzöpfe, in denen die stark zerrissene Ölschicht mit in die Tiefe gerissen wird.

Ein Verfahren zum Fördern und Aufstauen von auf spezifisch schwereren Flüssigkeiten schwimmenden, leichteren Flüssigkeiten, insbesondere von auf Wasser schwimmendem Öl, wobei mittels einer passiv oder aktiv arbeitenden Vorrichtung im Bereich der Trennschicht der beiden Flüssigkeiten eine in die gewünschte Förderrichtung weisende örtliche Übergeschwindigkeit erzeugbar ist, ist durch die EP-A-0 005 411 bekannt. Die Vorrichtung zur Durchführung dieses Verfahrens besteht aus einer schleppenden Einrichtung, vermittels der das auf einer Wasseroberfläche schwimmende Öl gesammelt, aufgefangen und in eine schwimmende Sammelkammer geleitet wird. Das Einsammeln und Auffangen der Ölschicht erfolgt mittels eines Einlaufgerätes, welches über einen Verbindungsschlauch mit der schwimmenden Sammelkammer verbunden ist. Dieses Einlaufgerät besteht aus einem Wehr mit einer vorgeschalteten, stabförmigen, oberen Begrenzung, so dass das Öl über das trichterartig ausgebildete bzw. die Wirkung eines Trichters habende Aufnahmegerät durch Stauung der Ölschicht vor dem Ölwehr dann über die Schlauchleitung dem Sammelbehälter zugeführt werden kann.

Mit einer derart ausgebildeten Olsammel-Vorrichtung ist es nicht möglich, die auf der Wasseroberfläche schwimmende Ölschicht aufzustauen, um ein wirkungsvolles Abschöpfen des Öls zu erreichen, denn die quer zur Anströmrichtung liegende Wand ist bei dieser Vorrichtung so angeordnet, dass deren Oberkante sich im Bereich der Trennschicht der beiden Flüssigkeiten befindet, so dass das bei dieser Vorrichtung vorgesehene Wehr lediglich Überströmfunktion hat, so dass ein Aufstauen der Ölschicht zu einer erheblichen Dicke vor dem Wehr nicht möglich ist.

Des weiteren ist durch die CH-A-454 047 ein Verfahren zur Beseitigung von auf Wasser schwimmenden flüssigen Stoffen, insbesondere Öl, und eine Vorrichtung zur Durchführung dieses Verfahrens bekannt. Das Verfahren zur Beseitigung von auf dem Wasser, insbesondere in grösseren Lachen, schwimmenden flüssigen Stoffen, insbesondere Öl, besteht darin, dass in der Wasseroberflächenschicht eine Strömung solcher Stärke zu einem abgegrenzten Raum erzeugt wird, dass in der auf dem Wasser schwimmenden Flüssigkeit ebenfalls eine Strömung zum abgegrenzten Raum entsteht, wobei die beiden Ströme am Rande des abgegrenzten Raumes durch ein festes, wannenartig ausgebildetes Trennorgan voneinander getrennt werden und im oberen Teil des Trennungsorgans die auf dem Wasser schwimmende Flüssigkeit abgesogen wird. Die Vorrichtung zur Durchführung dieses Verfahrens ist durch eine Wanne mit einem die Trennung bewirkenden Rand, in oder unter der Wanne radial angeordnete, mit dem freien Wasser in Verbindung stehende Rohre, die in ein Zentralrohr münden, welches über einen Schlauch über ein Rohr mit einer Absaugvorrichtung verbunden ist, einen oder mehrere Schwimmkörper, die über starre Arme mit der Wanne verbunden sind, eine oder mehrere in der Wanne angeordnete Ansaugvorrichtungen, die über Rohre oder Schläuche mit einer gesonderten Absaugvorrichtung verbunden sind, gekennzeichnet. Hiernach wird der abgegrenzte Raum durch einen im Wasser schwebenden Körper gebildet. Sowohl das Verfahren als auch die hierfür ausgebildete Vorrichtung sind unwirtschaftlich und sehr kostenaufwendig, denn es muss vermieden werden, dass Wasser in grösserem Umfang aus dem abgegrenzten Raum mit abgesogen wird, was durch Absenken des Wasserspiegels in dem durch den Schwebekörper abgegrenzten Raum mittels einer Wasserpumpe erfolgt, so dass dann das sich nunmehr über den Rand des Schwebekörpers hinweg im abgrenzenden Raum sammelnde Öl durch eine zweite Pumpe abgesaugt werden kann. Um einen wirtschaftlichen Betrieb dieser Vorrichtung zu erreichen, sind entsprechende Saugpumpen sowohl für das Absaugen des Öls, als auch für das Wasser erforderlich.

Hier will die Erfindung Abhilfe schaffen. Die Erfindung löst die Aufgabe, eine Vorrichtung zu schaffen, die die beim Fördern und Aufstauen des Öls auftretenden Probleme beseitigt und das berührungslose Fördern und Aufstauen des Öls vor wandartigen Bauteilen unter Vermeidung der Ausbildung von Wirbelwalzen ermöglicht, um ein rationelles und volles Abschöpfen von auf Wasser schwimmendem Öl zu erreichen.

Zur Lösung dieser Aufgabe sieht die Erfindung eine Vorrichtung zum Fördern und Aufstauen von auf spezifisch schwereren Flüssigkeiten schwimmenden leichteren Flüssigkeiten, insbesondere von auf Wasser schwimmendem Öl, entsprechend der eingangs beschriebenen Art vor, die in der Weise ausgebildet ist, dass der Staukörper aus

a) einer ebenen, profilierten oder strömungsgünstig ausgebildeten sowohl über- wie auch unterströmten, getauchten Wand, die über eine starre oder bewegliche Halterung mit einer festen Wand oder einem Schwimmkörper verbunden und mit ihrer Oberkante im Bereich der Trennschicht der beiden Flüssigkeiten liegend ist, oder

b) einem sowohl über- wie auch unterströmten, getauchten walzenförmigen Rotor, der mittels eines Antriebes um eine parallel zur Flüssigkeitsoberfläche und quer zur Anströmrichtung verlaufende, in einer Halterung gehaltene Achse drehbar ausgebildet ist, wobei die Umfangsgeschwindigkeit an der Rotoroberseite etwa in die gewünschte Förderrichtung weist und sich die Rotoroberseite im Bereich der Trennschicht der beiden Flüssigkeiten befindet,

besteht.

Die Erfindung beruht hiernach darin, im Bereich der Grenzfläche Öl/Wasser eine örtliche Übergeschwindigkeit zu erzeugen. Mittels der Vorrichtung wird durch das bewegte Bauteil oder durch relative Anströmung eine örtliche Übergeschwindigkeit im Bereich der Trennschicht der beiden Flüssigkeiten erzeugt, die die leichtere Flüssigkeit in die gewünschte Richtung fördert und vor einer Sperrwand aufstaut. So wird die Ursache für den genannten Ölfilm-Rückwirbel, nämlich der beim Versuch des Aufstauens vor einer Wand sich ausbildende Geschwindigkeitsgradient in der Grenzschicht Öl/Wasser, beseitigt und darüber hinaus eine Übergeschwindigkeit der Ölschicht gegenüber dem darunter befindlichen Wasser erreicht. Dadurch ist es möglich, die Ölschicht vor einer Wand zu einer erheblichen Dicke aufzustauen. Zur Erzeugung dieser Übergeschwindigkeit wird ein Rotor verwendet, der an seiner Oberseite eine in Förderrichtung weisende Strömung aufbaut. Auch senkrechte Wände, Wehre oder Verdränger, die entweder durch die Fahrbewegung der Gesamtvorrichtung selbst oder durch die natürliche Fliessbewegung des Wassers angeströmt werden, sind verwendbar. Diese Strömung wird vor der Wand gestoppt und aufgeteilt; ein Teil fliesst mit hoher Übergeschwindigkeit über die Oberkante der Vorrichtung, während der Rest unten herum abfliesst. Die Güte des Förderns und Aufstauens von Öl ist dabei abhängig von der Grösse der Vorrichtung, von der Lage zur Trennschicht Öl/Wasser und von der hydrodynamischen Form.

Weitere vorteilhafte Ausgestaltungen der Erfindung gehen aus den Unteransprüchen hervor.

Im folgenden wird die Erfindung anhand von verschiedene Ausführungswege darstellenden Zeichnungen näher erläutert.

Es zeigt:

Fig. 1 in einer Stirnseiten-Ansicht einen Rotor mit einer Abstreifleiste,

Fig. 2 in einer Stirnseiten-Ansicht eine profilierte Wehrwand mit einer starren Halterung vor einer Stauwand, und

Fig. 3 einen Längsschnitt durch eine Wehrwand mit Schwimmkörpern und mit Endscheiben.

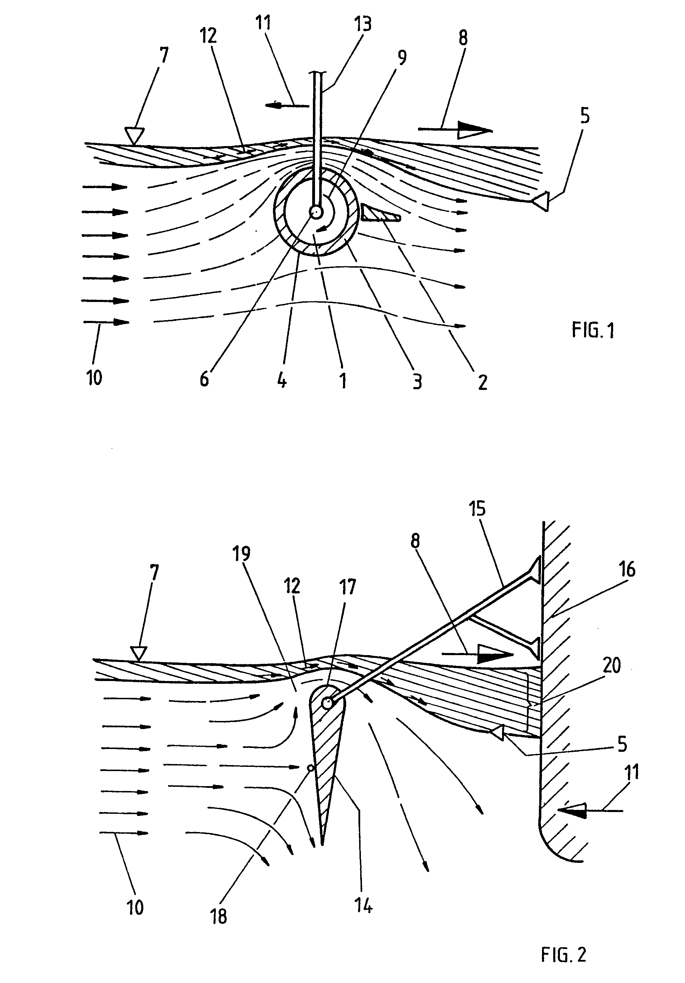

Die Vorrichtung nach Fig. 1 umfasst einen Rotor 1, der walzenförmig ausgebildet ist und der mit einer auf seiner Rückseite angeordneten Abstreifleiste 2 zusammenarbeitet. Der Mantel 3 des Rotors 1 ist aus beliebigem Material gefertigt und mit einer beliebigen Oberflächenstruktur 4 versehen. Die Rotoroberkante liegt etwas unterhalb der Trennschicht Öl/Wasser 5, seine Drehachse 6 verläuft annähernd parallel zur Flüssigkeitsoberfläche 7 und etwa senkrecht zur Förderrichtung 8. Der Drehsinn 9 des Rotors 1 ist so gewählt, dass die Umfangsgeschwindigkeit an der oberen, also dem Öl zugewandten Seite in Förderrichtung weist. Diese Umfangsgeschwindigkeit sollte grösser sein als die durch Anströmung 10 oder Eigenbewegung 11 verursachte Relativbewegung zwischen Wasser und Rotor 1. Hierdurch wird das Wasser in dem Bereich zwischen dem Rotor und der Ölschicht so stark beschleunigt, dass sich eine örtliche Übergeschwindigkeit ausbildet. Diese ist in der Lage, die Schubkräfte 12 auf die Ölschicht zu übertragen, so dass sich das Öl in Drehrichtung 9 des Rotors in Bewegung setzt und sich zu einer kompakten Schicht aufdickt.

Die Abstreif- oder Beruhigungsleiste 2, die auch an anderer Stelle und in anderer Form angebracht sein kann, soll das Mitreissen von Ölteilchen verhindern und für eine gleichmässige Strömung sorgen. Der Antrieb des Rotors 1 kann über einen extern angeordneten oder integrierten Motor beliebiger Bauart erfolgen, wobei zur Energiezufuhr die Halterung 13 mitbenutzt werden kann.

Die Fig. 2 zeigt eine Wehrwand 14, die hier aus strömungstechnischen Gründen profilartig geformt ist. Sie ist mit einer starren Halterung 15 an einer Stauwand 16 so befestigt, dass sich ihre Oberkante 17 kurz unterhalb der Trennschicht Öl/Wasser 5 befindet. Die Wasserbewegung 10 vor der Wehrwand 14, die wieder durch Eigenbewegung 11 der gesamten Anlage oder durch die natürliche Anströmung des Wassers bewirkt wird, bildet an der Vorderseite der Wehrwand 14 eine Potentialströmung mit Staupunkt 18 aus. Ein Teil des Wassers fliesst unter der Wehrwand hindurch, der Rest 19 strömt mit sehr hoher Geschwindigkeit über die Oberkante 17 und reisst dabei das Öl in die gewünschte Förderrichtung 8 mit. Vor der Stauwand 16, die beispielsweise zu einem Schiffskörper gehören kann, staut sich das Öl dann zu einer dicken Schicht 20 auf. Hier kann es sehr viel müheloser entfernt werden als der dünne Ölfilm vor der Vorrichtung. In der halbgetauchten Position gehalten wird diese Wehrwand 14 durch die starre oder bewegliche Halterung 15, die an der festen oder schwimmenden Wand 16 befestigt ist.

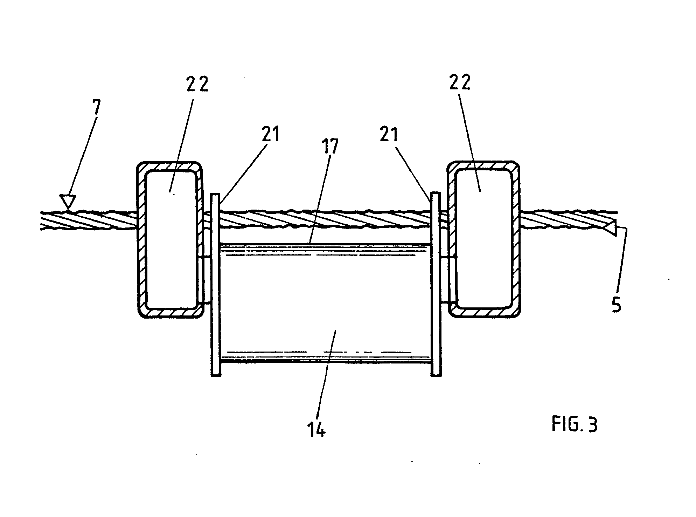

Die Fig. 3 zeigt den Längsschnitt durch eine Wehrwand 14 in Richtung der Anströmung gesehen. Zur Vermeidung seitlicher Umströmungen wird die Wehrwand 14 an ihren Stirnseiten mit Endscheiben 21 versehen, die über die Flüssigkeitsoberfläche hinausragen. Ferner sind als weitere Ausführungsform Schwimmkörper 22 eingezeichnet, die die Wehrwand in ihrer halbgetauchten Position halten. Sie befähigen die Vorrichtung, auch bei bewegtem Wasser das Öl zu fördern und aufzustauen.

Zur Lenkung und Förderung grösserer, geschlossener Ölteppiche können auch mehrere gleiche oder unterschiedliche Vorrichtungen der voranstehend beschriebenen Arten verwendet werden, die nebeneinander, hintereinander oder in beliebigen Winkeln zueinander angeordnet sind. Miteinander verbunden werden sie durch einfache Halterungen oder senkrechte Wände, die gleichzeitig eine Führung des Öls übernehmen können, oder durch waagerechte Böden, die zum Abfliessen des Wassers vorteilhafterweise mit Löchern versehen sein sollten.

**Patentansprüche**

1. Vorrichtung zum Fördern und Aufstauen von auf spezifisch schwereren Flüssigkeiten schwimmenden leichteren Flüssigkeiten, insbesondere von auf Wasser schwimmendem Öl unter Verwendung eines quer zur Anströmrichtung angeordneten Staukörpers (14, 1) mit dem im Bereich der Trennschicht (5) der beiden Flüssigkeiten eine in die gewünschte Förderrichtung weisende, örtliche Übergeschwindigkeit erzeugbar ist, dadurch gekennzeichnet, dass der Staukörper aus

a) einer ebenen, profilierten oder strömungsgünstig ausgebildeten sowohl über- wie auch unterströmten, getauchten Wand (14), die über eine starre oder bewegliche Halterung (15) mit einer festen Wand (16) oder einem Schwimmkörper verbunden und mit ihrer Oberkante (17) im Bereich der Trennschicht (5) der beiden Flüssigkeiten liegend ist, oder

b) einem sowohl über- wie auch unterströmten, getauchten walzenförmigen Rotor (1), der mittels eines Antriebes um eine parallel zur Flüssigkeitsoberfläche und quer zur Anströmrichtung (10) verlaufende, in einer Halterung (13) gehaltene Achse drehbar ausgebildet ist, wobei die Umfangsgeschwindigkeit an der Rotoroberseite ungefähr in die gewünschte Förderrichtung (8) weist und sich die Rotoroberseite im Bereich der Trennschicht (5) der beiden Flüssigkeiten befindet,

besteht.

2. Vorrichtung nach Anspruch 1, dadurch gekennzeichnet, dass der Mantel (4) des Rotors (1) aus einem festen oder flexiblen Material besteht, dessen Oberfläche glatt, aufgerauht, bürstenförmig ausgebildet oder mit anderen beliebig geformten Unebenheiten versehen ist.

3. Vorrichtung nach Anspruch 1 und 2, dadurch gekennzeichnet, dass an den Stirnseiten der Vorrichtung über die Flüssigkeitsoberfläche hinausragend ausgebildete Endscheiben (21) vorgesehen sind.

4. Vorrichtung nach Anspruch 1 bis 3, dadurch gekennzeichnet, dass dem Staukörper (14, 1) Bauteile (2) zum Abstreifen, Umlenken, Beruhigen oder Aufstauen der zu fördernden Flüssigkeit, z.B. des Öls, nachgeschaltet sind.

5. Vorrichtung nach Anspruch 1 bis 4, dadurch gekennzeichnet, dass die Vorrichtung mittels eines oder mehrerer auftriebsbehafteter Schwimmkörper (22) in ihrer getauchten Position gehalten ist.

6. Vorrichtung nach Anspruch 1 bis 5, dadurch gekennzeichnet, dass die Vorrichtung in einem Abstand vor einer etwa senkrecht stehenden Stauwand (16) angeordnet ist.

7. Vorrichtung nach Anspruch 1 bis 6, dadurch gekennzeichnet, dass mehrere gleiche oder unterschiedliche Vorrichtungen nebeneinander, hintereinander oder in beliebigen Winkeln zueinander angeordnet sind.

**Claims**

1. Device for the removal and damming up of lighter fluids floating on fluids of higher specific gravity, especially of oil floating on water using a baffle barrier (14, 1) arranged at right angles to the incoming flow direction, with which it is possible to produce a local overspeed directed in the desired delivery direction in the vicinity of the interface (5) of the two fluids, characterized in that the baffle barrier comprises

a) a flat, profiled or flow-favourably constructed, overflowed and underflowed, immersed wall (14), connected by means of a rigid or movable mounting support (15) to a fixed wall (16) or a float and whose upper edge (17) is in the vicinity of the interface (15) between the two fluids, or

b) an overflowed and underflowed, immersed, cylindrical rotor (1), which is rotatable about a shaft parallel to the fluid surface and at right angles to the incoming flow direction (10), whilst being secured in a mounting support (13), by means of a drive, the circumferential speed on the top of the rotor being directed approximately in the desired delivery direction (8) and the top of the rotor being located in the vicinity of the interface (5) of the two fluids.

2. Device according to claim 1, characterized in that the casing (4) of rotor (1) comprises a firm or flexible material, whose surface is smooth, roughened, brush-like or provided with other randomly shaped unevennesses.

3. Device according to claims 1 and 2, characterized in that end plates (21) projecting over the fluid surface are provided on the front faces of the device.

4. Device according to claims 1 to 3, characterized in that components (2) for stripping, deflecting, stabilizing or damming up the fluid, e.g. the oil to be delivered are connected downstream of the baffle barrier (14, 1).

5. Device according to claims 1 to 4, characterized in that the device is held in its immersed position by means of one or more buoyant floats (22).

6. Device according to claims 1 to 5, characterized in that the device is located at a distance in front of an approximately vertical baffle plate (16).

7. Device according to claims 1 to 6, characterized in that a plurality of identical or different devices are juxtaposed, arranged in succession or arranged in random angles to one another.

**Revendications**

1. Appareil pour enlever et retenir des liquides de poids volumique plus faible surnageant sur des liquides de poids spécifique plus fort, en particulier de l'huile surnageant sur de l'eau en utilisant un corps de retenue (14, 1) transversal par rapport à la direction d'écoulement par lequel une vitesse localement surélevée en sens d'enlèvement voulu peut être obtenue à la couche de séparation (5) entre les deux liquides, caractérisé en ce que le corps de retenue se compose

a) d'une paroi (14) unie, profilée ou avantageuse à l'écoulement, sous- et suscoulée et trempée, qui est reliée avec une paroi fixe (16) ou avec un corps mobile (15) et dont l'arête supérieure (17) se trouve à la couche de séparation (5) entre les deux liquides ou

b) d'un rotor cylindrique (1) sous- et suscoulé et trempé, qui, par l'intermédiaire d'un mécanisme de commande est exécuté de façon mobile autour un axe logé dans un dispositif porteur (13) et allant en parallèle à la surface du liquide et transversal par rapport au sens d'écoulement (10), la vitesse périphérique à la surface supérieure du rotor étant dirigée à peu près en sens voulu d'enlèvement (8) et la surface supérieure du rotor se trouvant à la couche de séparation (5) entre les deux liquides.

2. Appareil suivant la revendication 1, caractérisé en ce que l'enveloppe (4) du rotor (1) consiste en un matériel solide ou élastique dont la surface est unie, rendue rugueux, en forme de brosses ou munie d'autres aspérités en formes quelconques.

3. Appareil suivant les revendications 1 et 2, caractérisé en ce que de plaques finales (21) sont disposées aux côtés de devant de l'appareil de façon à saillir au-delà de la surface du liquide.

4. Appareil suivant les revendications 1 à 3, caractérisé en ce que des éléments (2) à dépouiller, dériver, apaiser ou retenir la liquide à enlever, de l'huile par exemple, sont intercalés en arrière le corps de retenue (14, 1).

5. Appareil suivant les revendications 1 à 4, caractérisé en ce que l'appareil est tenu en position trempée par l'intermédiaire d'un ou plusieurs corps flottants de force ascensionnelle (22).

6. Appareil suivant les revendications 1 à 5, caractérisé en ce que l'appareil est disposé à une distance d'une paroi de retenue (16) à peu près verticale.

7. Appareil suivant les revendications 1 à 6, caractérisé en ce que plusieurs appareils égaux ou différents sont logés l'un à côté de l'autre, l'un derrière l'autre ou en angles quelconques l'un par rapport à l'autre.

FIG. 1

FIG. 2

FIG. 3